(19) Europäisches Patentamt
European Patent Office
Office européen des brevets

(11) Veröffentlichungsnummer: **0 405 308 A2**

(12) **EUROPÄISCHE PATENTANMELDUNG**

(21) Anmeldenummer: **90111610.3**

(51) Int. Cl.5: **C08G 59/04**

(22) Anmeldetag: **20.06.90**

(30) Priorität: **24.06.89 DE 3920714**

(43) Veröffentlichungstag der Anmeldung: **02.01.91 Patentblatt 91/01**

(84) Benannte Vertragsstaaten: **BE CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Peter, Roland, Dr.**
**Pfalzring 92**
**D-6704 Mutterstadt(DE)**
Erfinder: **Schuhmacher, Rudolf, Dr.**
**Schulgaesschen 4**
**D-6737 Boehl-Iggelheim(DE)**
Erfinder: **Allspach, Thomas, Dr.**
**Seebacher Strasse 58 d**
**D-6702 Bad Duerkheim(DE)**

(54) **Härtbare Epoxidharze.**

(57) Härtbare Epoxidharze, erhältlich durch Umsetzung von
A) einem Präkondensat aus
$A_1$) 1 mol eines Harnstoffderivates der allgemeinen Formel I

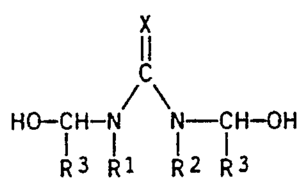

I

(x = Sauerstoff, Schwefel; $R^1$, $R^2$ = Alkyl, Cycloalkyl, Alkylcarbonyl, Aryl oder gemeinsam 1,2-Ethylen-, 1,3-Propylen-, 1,4-Butylen-, 2,2-Dimethyl-1,3-propylen-, 1,2-Cyclohexylen-, 1,2-Phenylengruppe $-CH_2-NR^4-CH_2-$; $R^3$ = Wasserstoff, Alkyl)
und
$A_2$) 1,05 bis 2 mol einer Hydroxyverbindung (II)
mit
B) 20 bis 100 mol% der im Präkondensat A vorhandenen Hydroxylgruppen eines Epihalohydrins (III)

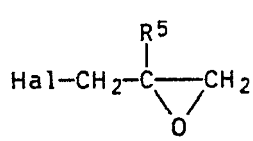

III

(Hal = Chlor, Brom; $R^5$ = Wasserstoff, Alkyl)
und

EP 0 405 308 A2

C) einer Base in organischer Lösung.

## HÄRTBARE EPOXIDHARZE

Die vorliegende Erfindung betrifft neue härtbare Epoxidharze, erhältlich durch Umsetzung von
A) einem Präkondensat aus

$A_1$) 1 mol eines Harnstoffderivates der allgemeinen Formel I

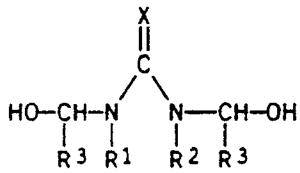

I

in der die Substituenten folgende Bedeutung haben:
x Sauerstoff oder Schwefel
$R^1$, $R^2$ $C_1$- bis $C_{12}$-Alkylgruppen;
Cycloalkylgruppen mit 5 oder 6 Ringgliedern; $C_1$- bis $C_{12}$-Alkylcarbonylgruppen oder die Benzoylgruppe; die Phenylgruppe oder Naphthylreste, wobei diese Gruppen ihrerseits eine oder zwei $C_1$- bis $C_4$-Alkyl- oder Alkoxygruppen tragen können, oder gemeinsam eine 1,2-Ethylen-, 1,3-Propylen-, 1,4-Butylen-, 2,2-Dimethyl-1,3-propylen-, 1,2-Cyclohexylen-, sowie eine 1,2-Phenylengruppe oder eine halogenierte 1,2-Phenylengruppe oder eine Gruppierung $-CH_2-NR^4-CH_2-$, in der $R^4$ eine $C_1$- bis $C_4$-Alkylgruppe bedeutet, bilden
$R^3$ Wasserstoff oder $C_1$- bis $C_4$-Alkylgruppen
und
$A_2$) 1,05 bis 2 mol einer ein- oder zweikernigen aromatischen Hydroxyverbindung (II), die eine oder zwei $C_1$- bis $C_4$-Alkyl- oder Alkoxygruppen, sowie Fluor, Chlor, Brom oder Jod als Substituenten tragen kann
mit
B) 20 bis 100 mol% der im Präkondensat A vorhandenen Hydroxylgruppen eines Epihalohydrins der allgemeinen Formel III

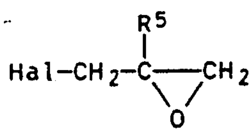

III

in der Hal für Chlor oder Brom steht und $R^5$ Wasserstoff oder eine $C_1$- bis $C_4$-Alkylgruppe bedeutet
und
C) einer Base in organischer Lösung.

Außerdem betrifft die Erfindung ein Verfahren zur Herstellung dieser Harze, deren Verwendung zur Herstellung von Verbundwerkstoffen, Formkörpern und Überzügen und als Klebstoffe sowie die hierbei erhältlichen Formkörper aus den gehärteten Harzen.

Bei den härtbaren Epoxidharzen handelt es sich hauptsächlich um zwei- oder mehrwertige aliphatische oder aromatische Alkohole, deren Hydroxylgruppen gänzlich oder zum Teil mit einem Epoxyalkylrest wie der Glycidylgruppe

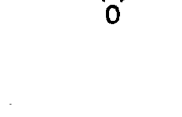

verethert sind.

Aus Lee, Neville in Handbook of Epoxy Resins, McGraw-Hill, 1967, sind Harze dieses Typs bekannt, deren Alkoholkomponente ein Phenol-Formaldehyd-kondensationsprodukt (Novolak) ist. Derartige Harze dienen hauptsächlich für elektrotechnische Zwecke, da sie im gehärteten Zustand sehr wärmefest und formstabil sind. Andererseits sind diese gehärteten Harze sehr spröde, weshalb ihre mechanische Belastbarkeit, z.B. gegen Biegen oder Stoß, relativ gering ist.

Weiterhin sind aus der EP-A 43 347 Kondensationsprodukte aus N,N'-Disubstituierten Harnstoffen und Epichlorhydrin bekannt, die sich zur Herstellung von flammwidrigen Formkörpern eignen. Auch diese härtbaren Epoxidverbindungen lassen zu wünschen übrig, weil ihre mechanischen Eigenschaften, insbesondere ihre Schlagzähigkeit für technische Anwendungen nicht ausreichen.

Der Erfindung lagen daher neue härtbare Epoxidharze als Aufgabe zugrunde, deren Eigenschaften eine vielseitigere Verwendung gestatten.

Demgemäß wurden die eingangs definierten härtbaren Epoxidharze gefunden. Weiterhin wurde ein Verfahren zur Herstellung dieser Harze sowie ihre Verwendung zur Herstellung von Verbundwerkstoffen, Formkörpern, Überzügen und Klebstoffen gefunden.

Die zur Herstellung der erfindungsgemäßen Harze als Ausgangsverbindungen dienenden Methylolharnstoffderivate I sind allgemein bekannt oder in bekannter Weise durch Umsetzung von Harnstoffderivaten I'

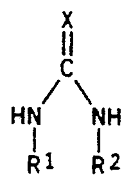

I'

mit Aldehyden $R^3$-CHO erhältlich.

Im Hinblick auf die Eigenschaften der gehärteten Harze und auch aus wirtschaftlichen Gründen werden solche Verbindungen I bevorzugt, die sich vom Ethylenharnstoff und vom Propylenharnstoff einerseits und vom Formaldehyd andererseits ableiten, also Verbindungen der Formeln Ia und Ib

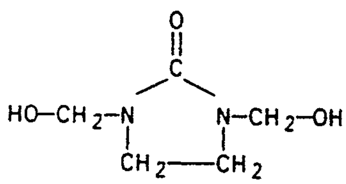

Ia

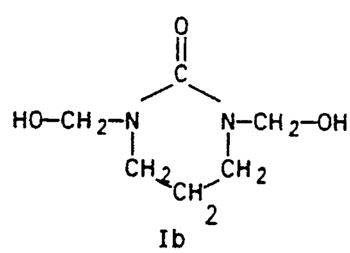

Ib

Daneben kommen Verbindungen I in Betracht, in denen $R^1$ und $R^2$ für Alkylgruppen wie die Methylgruppe stehen. Legt man auf eine besonders gute Löslichkeit der Harze in wenig polaren Lösungsmitteln, z.B. in Toluol, Wert, empfehlen sich Verbindungen mit längerkettigen Alkylgruppen wie die n-Octyl- oder 2-Ethylhexylgruppe oder auch die Cyclopentyl- und die Cyclohexylgruppe. Alkylcarbonylgruppen als Reste $R^1$ und $R^2$, beispielsweise die Acetyl- oder Propionylgruppe verleihen den Harzen etwa die gleichen Eigenschaften wie die Alkylgruppen, bedingen jedoch eine bessere Löslichkeit in polaren Lösungsmitteln wie etwa Dimethylformamid.

Als aromatische Reste $R^1$ und $R^2$ sind vornehmlich die Phenylgruppe, die Tolylgruppe, Methoxyphenylgruppen und die Naphthylgruppen zu nennen, die den gehärteten Harzen eine besondere Wärmefestigkeit verleihen. Das gleiche gilt für die Benzoylgruppe als Reste $R^1$ und $R^2$ und die Phenylengruppe, in der diese Reste zu einem gemeinsamen Ringglied verbunden sind.

Zur weiteren Modifizierung der Eigenschaften der härtbaren oder gehärteten Harze können die aromatischen Reste $R^1$ und $R^2$ auch die definitionsgemäßen Substituenten tragen. Weiterhin können die entsprechenden Thioharnstoffe eingesetzt werden.

Bevorzugt werden Verbindungen I mit gleichen Substituenten $R^1$ und $R^2$, jedoch können sie auch verschieden sein, z.B. wenn das Molekül nur eine Naphthylgruppe enthalten soll.

Die Alkylolgruppen -$CHR^3$-OH leiten sich bevorzugt vom Formaldehyd ab, zumal diese bei der weiteren Umsetzung am schnellsten reagieren. Selbstverständlich kann man auch von beliebigen Mischungen verschiedener Verbindungen I ausgehen.

Als aromatische Hydroxyverbindungen II sind in erster Linie Phenol und daneben m- und p-Kresol zu nennen. Weiterhin eignen sich $\alpha$- und $\beta$-Naphthol, Resorcin und Bisphenol A sowie die definitionsgemäßen Alkyl-, Alkoxy- und Halogenderivate dieser Verbindungen oder Mischungen der genannten Verbindungen II, sofern durch die Substitution mindestens zwei kondensationsfähige Stellen - beispielsweise beim Phenol die p- und die beiden o-Positionen - frei gelassen werden.

Für den Fall, dap das Präkondensat A aus 1 mol des Harnstoffderivates I und 2 mol der aromatischen Hydroxyverbindung II aufgebaut ist

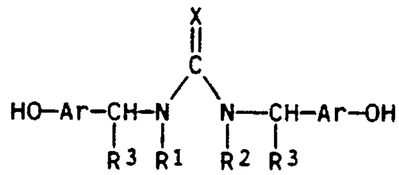

IV .

Ar = aromatischer Rest von II

braucht II nur eine kondensationsfähige Stelle aufzuweisen. Die Präkondensate IV werden besonders bevorzugt, weil sie lediglich bifunktionell sind und bei der Umsetzung mit den Epihalohydrinen III, unter denen das Epichlorhydrin die größte Bedeutung hat, in die ebenfalls bifunktionellen härtbaren Harze

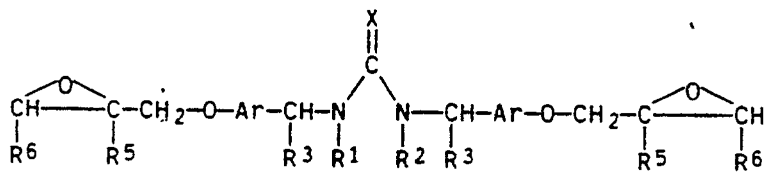

übergehen.

Die Härtung dieser Verbindungen führt nur zu einer mäßigen Vernetzung und somit zu einer geringeren Sprödigkeit der gehärteten Harze.

Bei geringerem Molverhältnis von II zu I entstehen höhermolekulare Präkondensate des Aufbaus

$II-(I-II)_n$

wobei n einen Wert bis 20 einnehmen kann, entsprechend einem Molverhältnis von II zu I von 1,05 zu 1. Vorzugsweise setzt man die im Präkondensat A vorkommenden Hydroxylgruppen vollständig mit dem Epihalohydrin III um, jedoch genügt in manchen Fällen, besonders wenn mehr als 5 Hydroxylgruppen im Molekül vorhanden sind, auch ein geringerer Epihalogenierungsgrad, der aber 20 mol% der Hydroxylgruppen nicht unterschreiten sollte.

Die erfindungsgemäßen Epoxidharze sind nach an sich bekannten Methoden erhältlich. Man kann von den z.T. im Handel erhältlichen Alkylolharnstoffen I ausgehen oder in einem vorgeschalteten Verfahrensschritt von den Harnstoffen I' und den Aldehyden.

Im Falle des Formaldehyds legt man zweckmäßigerweise eine wäßrige alkalische Lösung von 2 bis 2,5 mol des Aldehyds vor und gibt hierzu bei 25 bis 50 °C allmählich das Harnstoffderivat I'. Als Basen eignen sich hierfür z.B. Natrium- und Kaliumhydroxid, besonders aber Calciumhydroxid, da dieses nach beendeter Reaktion durch Einleiten von Kohlendioxid leicht als Calciumcarbonat abgetrennt werden kann. Vorzugsweise verwendet man katalytische Mengen an Base, etwa 0,5 bis 2 mol% pro Mol I', und die Menge des Wassers wird bevorzugt so bemessen, daß das Reaktionsmedium einen pH-Wert von etwa 8 bis 12 aufweist.

Nach beendeter Reaktion neutralisiert man das Gemisch, trennt das entstandene Salz vorzugsweise ab und entfernt das Wasser und überschüssige Reaktionspartner zweckmäßigerweise durch destillative Einengung, bei der das praktisch reine I anfällt.

Bei der Herstellung des Präkondensates empfiehlt es sich, die phenolische Verbindung II zur Reduzierung des Kondensationsgrades im Überschuß (Molverhältnis II zu I gleich 2 : 1 bis etwa 10 : 1) einzusetzen, d.h. die erfindungsgemäßen Molverhältnisse beziehen sich auf umgesetztes, nicht auf eingesetztes II. Weiterhin kann durch Wahl der Temperatur, die etwa zwischen 80 und 200 °C liegt, der Reaktionszeit und der Katalysatorkonzentration der gewünschte Kondensationsgrad eingestellt werden. Ist der Kondensationsgrad erreicht, wie sich durch Probennahme unschwer ermitteln läßt, destilliert man das überschüssige II ab, wobei man die Restmengen durch Wasserdampfdestillation entfernen kann.

Als Kondensationskatalysatoren dienen starke Säuren wie Schwefelsäure, Phosphorsäure und vor allem p-Toluolsulfonsäure in katalytischen Mengen.

Die Umsetzung des Präkondensates mit dem Halohydrin III erfolgt in organischer Lösung. Als Lösungsmittel eignen sich vor allem das Halohydrin III selbst sowie daneben Kohlenwasserstoffe, Ketone oder Alkohole. Der gewünschte Umsetzungsgrad, der in der Regel 100 mol% der im Präkondensat A vorhandenen Hydroxylgruppen beträgt, kann durch die Menge an Halohydrin III eingestellt werden.

Für die Reaktion sind stöchiometrische Mengen - bezogen auf die Anzahl der Phenolgruppen - einer Base erforderlich, wobei hier vorzugsweise starke Mineralbasen wie Natriumhydroxid - und zwar in konzentrierter wäßriger Lösung - verwendet werden.

Das hierbei eingeführte Wasser und das Reaktionswasser wird wie üblich weitgehendst destillativ entfernt. Die Reaktionstemperatur beträgt vorzugsweise 50 bis 120 °C. Nach beendeter Umsetzung wäscht man das verfahrensprodukt mit Wasser und befreit es anschließend destillativ vom Lösungsmittel und übschüssigem III.

Die erfindungsgemäßen härtbaren Epoxidharze können wie die herkömmlichen Epoxidharze zu geformten gehärteten Produkten weiterverarbeitet werden, und zwar entweder allein oder in Mischung mit bis zu 90 Gew.% anderen Epoxidharzen, wie beispielsweise solche auf Basis von Bisphenol A oder Novolaken. Als Härtungsmittel eignen sich Härtungskatalysatoren in katalytischen Mengen sowie zusätzliche Harzkomponenten, welche die Härtung bewirken. Katalysatoren sind beispielsweise Amine oder auch Lewis-Säuren wie Borfluorid, und als härtende Harzkomponente kommen mehrwertige Amine wie Diaminodiphenylsulfon und Diaminodiphenylmethan, Carbonsäureanhydride wie Phthalsäureanhydrid und 1,2,4-Benzoltricarbonsäureanhydrid und Carbonsäurehydrazide wie Adipinsäurehydrazid in Betracht.

Die bei der Härtung der erfindungsgemäßen Epoxidharze erhaltenen Formteilen zeichnen sich durch gute Temperaturbeständigkeit, hohe Schlagzähigkeit und gute Adhäsionseigenschaften aus. Weiterhin können sie in Faserverbundwerkstoffen, Überzügen und Klebstoffen Verwendung finden.

## Beispiele

### Herstellung der Präkondensate

#### Beispiel 1

N,N'-Bis-(hydroxyphenylmethylen)-ethylenharnstoff

Eine Lösung aus 116 g (1,56 mol) 40%iger Formalinlösung und 0,5 g Calciumhydroxid wurde bei 20 - 30 °C allmählich mit 67 g (0,78 mol) Ethylenharnstoff versetzt und dann für 20 Minuten auf 50 °C erwärmt. Danach wurde die Base mit Kohlendioxid in Calciumcarbonat überführt, welches abgetrennt wurde, und anschließend wurde das Reaktionsgemisch eingeengt. Die Ausbeute an dem N,N'-Dimethylolethylenharnstoff war praktisch quantitativ.

76 g (0,52 mol) dieser Verbindung wurden bei 90 °C mit 282 g (3 mol) Phenol und 0,5 g p-Toluolsulfonsäure im Laufe von 8 Stunden umgesetzt. Nach destillativer Abtrennung des Großteiles des überschüssigen Phenols (180 °C, 35 mbar) wurde die Restmenge fast vollständig durch Wasserdampfdestillation entfernt. Das Umsetzungsprodukt entsprach der obengenannten Formel.
Erweichungspunkt 75 °C; Ausbeute 161 g

#### Beispiel 2

N,N'-Bis(hydroxy-3,5-dimethylphenylmethylen)-ethylenharnstoff

Diese kristalline Verbindung wurde analog Beispiel 1 aus 76 g (0,52 mol) N,N'-Dimethylethylenharnstoff und 244 g (2 mol) 2,4-Dimethylphenol hergestellt und aus Methanol umkristallisiert.
Schmelzpunkt 175 - 176 °C; Ausbeute 177 g

#### Beispiel 3

N,N'-Bis-(hydroxyphenylmethylen)-propylenharnstoff

Die Herstellung dieser Verbindung erfolgte analog Beispiel 1. Aus 332 g (4,42 mol) 40 %iger Formalinlösung, 1,5 g Calciumhydroxid und 232 g (2,32 mol) Propylenharnstoff wurde der N,N′-Dimethylolpropylenharnstoff hergestellt. 190 g (1,12 mol) dieser Verbindung wurden mit 564 g (6 mol) Phenol zum obengenannten Produkt umgesezt.
Erweichungspunkt 103 °C; Ausbeute 317 g

Herstellung der härtbaren Epoxidharze

Beispiel 4

Bis-glycidylether des N,N′-Bis-(hydroxyphenylmethylen)-ethylenharnstoffs

149 g (0,5 mol) der in Beispiel 1 hergestellten Verbindung wurden in 1110 g (12 mol) Epichlorhydrin gelöst, zu leichtem Rückfluß erwärmt und anschließend wurden 84 g (1.05 mol) 50 %ige Natronlauge zudosiert. Das Azeotrop aus Epichlorhydrin und Wasser wurde kontinuierlich abdestilliert, so daß die Konzentration an Wasser bei etwa 1 % gehalten werden konnte. Nach beendetem Laugenzulauf (Dauer ca. 2,5 Stunden) und einer Nachreaktionszeit von 30 Minuten wurde auf 80 °C abgekühlt und das Produkt mit 250 g (13.88 mol) Wasser versetzt. Nach der Phasentrennung wurde die organische Schicht noch zweimal mit Wasser gewaschen und anschließend über einen Dünnschichtverdampfer bei 130 °C und 3 mbar vom überschüssigen Epichlorhydrin befreit. Das erhaltene Produkt war völlig klar und schwach gelb gefärbt.
Ausbeute 185 g; Epoxidäquivalentgewicht 208 g/eq.

Härtung und Prüfung der Epoxidharze

Aus 500 g (1.22 mol) des in Beispiel 4 hergestellten Epoxidharzes und 200 g (1 mol)

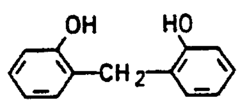

(Bisphenol F-Epoxidharz) sowie 330 g (1,33 mol) Diaminodiphenylsulfon wurden rechteckige Platten von 4 mm Dicke hergestellt. Hierzu wurde 1 Stunde bei 150 °C angeliert und jeweils 2 Stunden bei 180 °C und 200 °C ausgehärtet.

| Kenndaten der Platten: | |
|---|---|
| | Erfindungsgemäße härtbare Epoxidharze |
| Glastemperatur Tg | 166 °C |
| Schubmodul G′ | 1245 MPa |
| E-Modul | 4080 MPa |
| Rißzähigkeit $K_{IC}$ | 0,71 MPa • $m^{0,5}$ |

**Ansprüche**

1. Härtbare Epoxidharze, erhältlich durch Umsetzung von A) einem Präkondensat aus
$A_1$) 1 mol eines Harnstoffderivates der allgemeinen Formel I

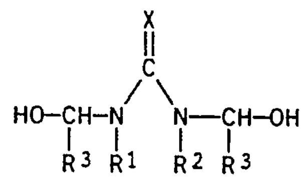

I

in der die Substituenten folgende Bedeutung haben:
X Sauerstoff oder Schwefel
$R^1$, $R^2$ $C_1$- bis $C_{12}$-Alkylgruppen;
Cycloalkylgruppen mit 5 oder 6 Ringgliedern; $C_1$- bis $C_{12}$-Alkylcarbonylgruppen oder die Benzoylgruppe; die Phenylgruppe oder Naphthylreste, wobei diese Gruppen ihrerseits eine oder zwei $C_1$- bis $C_4$-Alkyl- oder Alkoxygruppen tragen können, oder gemeinsam eine 1,2-Ethylen-, 1,3-Propylen-, 1,4-Butylen-, 2,2-Dimethyl-1,3-propylen-, 1,2-Cyclohexylen-, sowie eine 1,2-Phenylengruppe oder eine halogenierte 1,2-Phenylengruppe oder eine Gruppierung $-CH_2-NR^4-CH_2-$, in der $R^4$ eine $C_1$- bis $C_4$-Alkylgruppe bedeutet, bilden
$R^3$ Wasserstoff oder $C_1$- bis $C_4$-Alkylgruppen
und
$A_2$) 1,05 bis 2 mol einer ein- oder zweikernigen aromatischen Hydroxyverbindung (II), die eine oder zwei $C_1$- bis $C_4$-Alkyl- oder Alkoxygruppen sowie Fluor, Chlor, Brom oder Jod als Substituenten tragen kann
mit
B) 20 bis 100 mol% der im Präkondensat A vorhandenen Hydroxylgruppen eines Epihalohydrins der allgemeinen Formel III

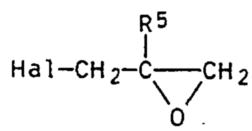

III

in der Hal für Chlor oder Brom steht und $R^5$ Wasserstoff oder eine $C_1$- bis $C_4$-Alkylgruppe bedeutet
und
C) einer Base
in organischer Lösung.

2. Härtbare Epoxidharze nach Anspruch 1, erhältlich aus N,N′-Dimethylolethylenharnstoff (Ia) oder N,N′-Dimethylolpropylenharnstoff (Ib)

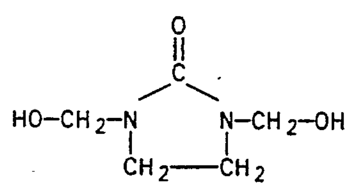

Ia

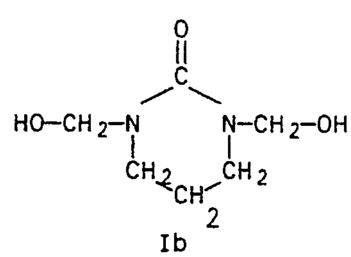

Ib

als Verbindungen I.

3. Härtbare Epoxidharze nach den Ansprüchen 1 oder 2, erhältlich aus Phenol als Verbindung II.

4. Härtbare Epoxidharze nach den Ansprüchen 1 bis 3, erhältlich aus Epichlorhydrin als Verbindung III.

5. Härtbare Epoxidharze nach den Ansprüchen 1 bis 4, erhältlich durch Umsetzung von 1 mol I mit 2 mol II.

6. Verfahren zur Herstellung von härtbaren Epoxidharzen gemäß den Verfahrensbedingungen von Anspruch 1.

7. Verfahren zur Herstellung von Verbundwerkstoffen mittels eines härtbaren Epoxidharzes sowie eines Härtungskatalysators oder einer die Härtung bewirkende zusätzlichen Harzkomponente und Verstärkungsmaterialien wie Glas-, Aramid- oder Kohlenstoffasern, dadurch gekennzeichnet, daß man hierzu die härtbaren Epoxidharze gemäß den Ansprüchen 1 bis 6 verwendet.

8. Verfahren zur Herstellung von Formkörpern und Überzügen mittels eines härtbaren Epoxidharzes und eines Härtungskatalysators oder einer die Härtung bewirkende zusätzlichen Harzkomponente, dadurch

gekennzeichnet, daß man hierzu die härtbaren Epoxidharze gemäß den Ansprüchen 1 bis 6 verwendet.

9. Verfahren zum Verkleben von Formteilen mittels eines härtbaren Epoxidharzes und eines Härtungskatalysators oder einer die Härtung bewirkende zusätzlichen Harzkomponente, dadurch gekennzeichnet, daß man hierzu die härtbaren Epoxidharze gemäß den Ansprüchen 1 bis 6 verwendet.

10. Formkörper aus gehärteten Epoxidharzen, erhältlich aus den härtbaren Epoxidharzen gemäß den Ansprüchen 1 bis 6.